# FASCICULE DE BREVET EUROPEEN

(11) **EP 3 233 565 B1**
(45) Date de publication et mention de la délivrance du brevet: **06.02.2019**
(21) Numéro de dépôt: 15828748.2
(22) Date de dépôt: 17.12.2015
(51) Int. Cl.: A47C 7/56, B60N 2/30, B60N 2/90

(54) **SIEGE ESCAMOTABLE**
AUSFAHRBARER SITZ
RETRACTABLE SEAT

(30) Priorité: 19.12.2014 FR 1402967
(43) Date de publication de la demande: 25.10.2017
(73) Titulaire: NEXTER Systems, 42328 Roanne (FR)
(72) Inventeur: DUINAT, Jean-Luc, 18023 Bourges (FR); DESCATOIRE, Xavier, 18023 Bourges (FR)
(74) Mandataire: Cabinet Chaillot
(86) Numéro de dépôt international: PCT/FR2015/053607
(87) Numéro de publication internationale: WO 2016/097640

(56) Documents cités:
- EP-A1- 0 518 346
- DE-U1- 29 512 327
- FR-A1- 2 548 106
- US-A- 2 636 549
- US-A1- 2012 293 937

## Description

Le domaine technique de l'invention est celui des sièges escamotables pour véhicules militaires.

Afin de rendre l'embarquement à bord des véhicules militaires plus aisé, il est connu d'employer des sièges escamotables pour des passagers embarqués, l'assise de ces sièges pouvant se relever pour libérer le passage.

Ainsi, le brevet FR2548106 divulgue un siège escamotable comportant une assise basculante située à l'extrémité d'un bras articulé apte à passer d'une position horizontale à une position verticale par rapport à un bâti. L'assise est reliée par ailleurs au bâti au moyen d'une bielle qui agit comme un moyen de transmission de mouvement en permettant de faire basculer l'assise en position verticale lorsque le bras est relevé et qui permet de soutenir l'assise lorsqu'elle est en position horizontale. Pour ce faire, la bielle est située sous l'assise et reliée à la base inférieure du bâti. Une telle disposition de la bielle empêche de placer des objets sous l'assise ce qui réduit la capacité d'emport du véhicule.

L'invention propose de résoudre ce problème en supprimant la bielle et en fournissant des moyens non encombrants permettant le basculement de l'assise en fonction de la position angulaire du bras.

Avantageusement, l'invention fournit à l'occupant du siège une protection contre les chocs de mine.

L'invention porte sur un siège escamotable comportant au moins un bras articulé comportant un premier axe perpendiculaire au niveau de sa première extrémité et un second axe parallèle au premier axe au niveau de sa seconde extrémité, premier axe destiné à permettre le basculement d'une assise par rapport au bras et second axe destiné à permettre le pivotement du bras articulé relativement à un bâti, siège escamotable comportant au moins un moyen de transmission de mouvement destiné à faire basculer l'assise entre une position horizontale et une position verticale sous l'action du pivotement du bras, action de pivotement du bras limitée en amplitude par un moyen de limitation

Avantageusement, le moyen de transmission de mouvement comporte un lien reliant d'une part une première roue solidaire de l'assise et centrée sur le premier axe et d'autre part une seconde roue solidaire du bâti et centrée sur le second axe.

Avantageusement, le diamètre de la seconde roue est le double du diamètre de la première roue. Avantageusement, les roues et le lien sont contenus dans le bras articulé.

Avantageusement, le siège escamotable comporte au moins un ressort exerçant un effort de rappel entre l'assise et le bras de manière à rapprocher du bras une face inférieure de l'assise, entraînant ainsi le relèvement du bras articulé.

Avantageusement, l'assise comporte un moyen de blocage du basculement de l'assise par rapport au bras afin de bloquer le siège dans une position fixe.

Avantageusement, le moyen de blocage constitue le moyen de limitation.

Selon un mode de réalisation, le moyen de blocage est dimensionné pour rompre sous l'effet d'un choc de mine afin de libérer le pivotement du bras vers le bas.

Selon un autre mode de réalisation, le lien est dimensionné pour rompre sous l'effet d'un choc de mine afin de libérer le pivotement du bras vers le bas.

Avantageusement, le moyen de limitation comporte une butée située sur le bras, butée interférant avec le bâti afin de limiter le pivotement du bras vers le bas.

Avantageusement, la butée est dimensionnée pour rompre sous l'effet d'un choc de mine afin de libérer le pivotement du bras vers le bas.

L'invention sera mieux comprise à la lecture de la description suivante, description faite en référence aux dessins annexés dans lesquels :
La figure 1 représente une vue latérale d'un siège escamotable selon l'invention, en position relevée verticalement et avant son déploiement.
La figure 2 représente une vue schématique latérale d'un siège escamotable en cours de déploiement.
La figure 3 représente une vue schématique latérale d'un siège escamotable en position horizontale.
La figure 4 représente une vue de dessous en perspective de l'assise du siège escamotable.

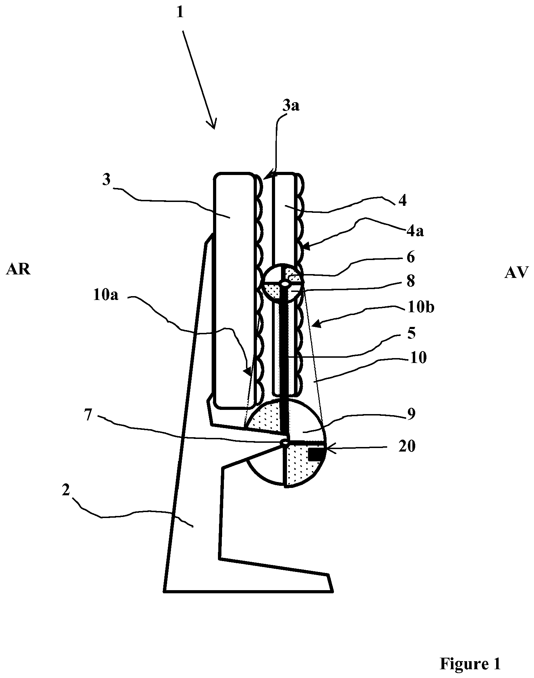

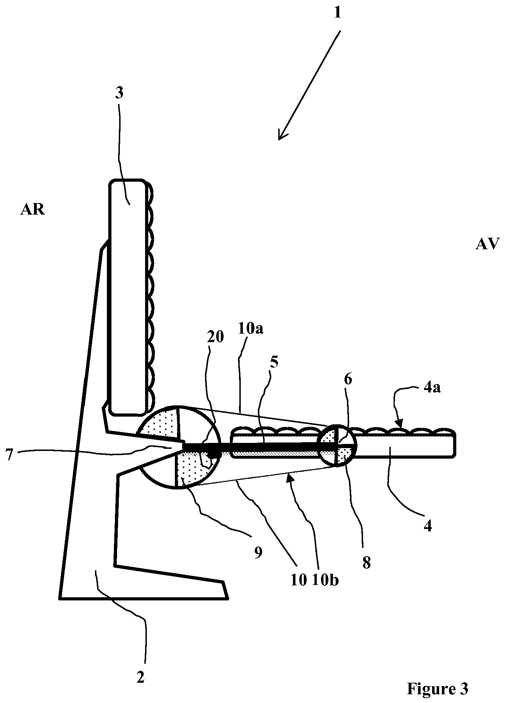

Selon la figure 1, un siège escamotable 1 comporte un bâti 2 destiné à être solidarisé avec un habitacle de véhicule (habitacle non représenté). Le bâti 2 est solidaire d'un dossier 3 sensiblement vertical, dossier 3 comportant une partie capitonnée 3a orientée vers l'avant AV du siège et ayant pour fonction d'apporter du confort dorsal à un utilisateur du siège (utilisateur non représenté). Le siège 1 comporte également une assise 4 comportant une face matelassée 4a désignée comme face supérieure 4a et destinée à supporter l'utilisateur du siège 1 lorsque le siège 1 est en position abaissée comme à la figure 3.

Un bras articulé 5 relie l'assise 4 au bâti 2. Une première extrémité du bras articulé 5 comporte un premier axe 6 par rapport auquel l'assise 4 peut basculer.

La seconde extrémité du bras articulé 5 comporte un second axe 7 parallèle au premier axe 6 et destiné à permettre le pivotement du bras 5 par rapport au bâti 2. Une première roue 8, ici une poulie 8, est solidaire de l'assise 4 et est centrée sur le premier axe 6. Une seconde roue 9, ici une poulie 9, est centrée sur le second axe 7 et est solidaire du bâti 2. Un lien 10, ici un lien souple en la forme d'une courroie 10 relie les poulies 8 et 9 en s'engageant dans des gorges respectives des poulies 8 et 9 (gorges non visibles) de manière à agir en moyen de transmission de mouvement 10.

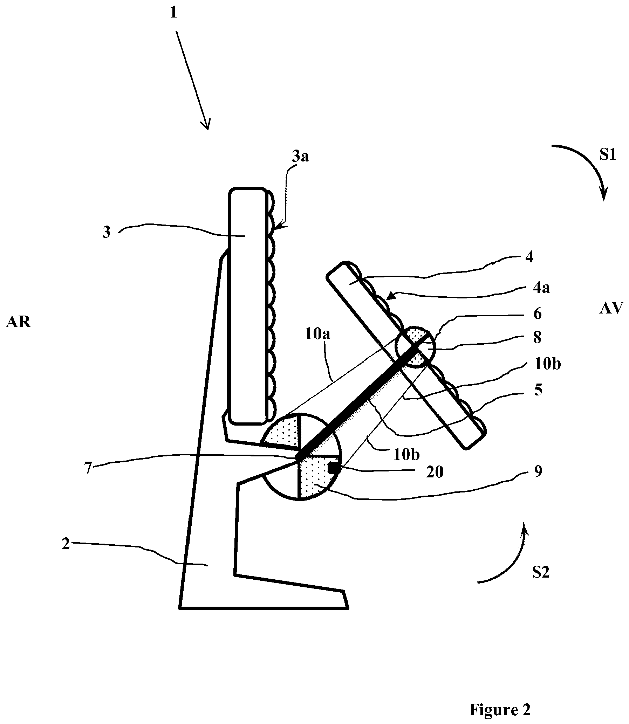

Ainsi, lorsque le bras articulé 5 pivote (suivant le sens donné par la flèche S1) depuis une position sensiblement verticale, comme à la figure 1, jusque vers une position sensiblement horizontale, comme à la figure 3, en passant par une position intermédiaire, comme à la figure 2, alors la courroie 10 s'enroule sans glissement par sa partie 10a située vers l'arrière AR du siège quand le bras est vertical, autour de la seconde poulie 9 qui est fixe par rapport au bâti 2, et se déroule de la seconde poulie 9 par sa partie 10b située vers l'avant du siège 1 quand le bras 5 est en position verticale. Ce mouvement d'enroulement/déroulement sans glissement de la courroie 10 autour de la seconde poulie 9 provoque parallèlement un déroulement de la partie 10a de la courroie de la première poulie 8 et un enroulement de la partie 10b de la courroie sur la première poulie 8.

Ce faisant, la courroie 10 agit en moyen de transmission 10 d'un mouvement de rotation vers la première poulie 8 qui pivote autour du premier axe 6 et entraine ainsi l'assise 4 en basculement autour du premier axe 6, basculement suivant le sens donné par la flèche S2, donc inverse au sens de basculement S1 du bras 5.

On constate que si la seconde poulie 9 a un diamètre Ø2 équivalent au double du diamètre Ø1 de la première poulie 8 alors l'assise 4 pivotera de 90 degrés par rapport au bâti 2 entre une position sensiblement verticale quand le bras articulé 5 est vertical à une position sensiblement horizontale (figure 3) quand le bras articulé 5 est également horizontal. En effet le bras 5 pivote de plus quatre-vingt-dix degrés par rapport au bâti 2 et l'assise 4 pivote de moins cent quatre-vingt degrés par rapport au bras 5.

Ainsi, l'Homme du Métier choisira le rapport de diamètre entre poulies 8 et 9 qui lui semblera le plus adapté selon l'inclinaison finale qu'il souhaite donner à l'assise ou en fonction de l'implantation de la seconde articulation 7 par rapport au bâti 2 et de l'amplitude de pivotement du bras articulé 5.

On note que le basculement de l'assise 4 autour du premier axe 6 se fait de manière à toujours exposer la surface capitonnée 4a de l'assise 4 vers un éventuel utilisateur du siège 1.

Afin de limiter le pivotement du bras 5 vers le bas, un moyen de limitation 20 comportant une butée 20 située sur la seconde poulie 9 ou sur le bâti 2 sera disposé afin d'interférer avec le bras 5 (mode de réalisation par butée solidaire du bâti non représenté).

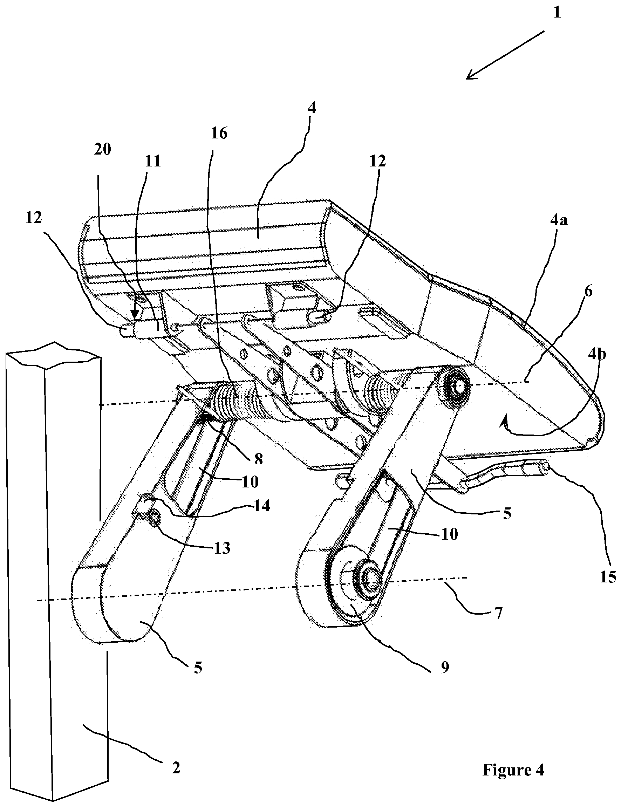

Selon le mode de réalisation de la figure 4, le siège 1 comporte une paire de bras articulés 5 creux et aptes chacun à contenir au moins en partie une première poulie 8 et une deuxième poulie 9 ainsi qu'une courroie crantée 10 formant un moyen de transmission de mouvement 10. Un ressort hélicoïdal 16 agissant en torsion est enroulé autour du premier axe 6 et il est agencé de manière à agir entre l'assise 4 et au moins un des bras articulé 5 (ici il y a deux ressorts 16 chaque ressort 16 agissant sur un des bras 5).

Le ressort 16 est mis en torsion de façon à ce que l'effort qu'il exerce tende à ramener l'assise 4 avec sa face inférieure 4b en appui contre les bras 5. Ce rapprochement de l'assise 4 et des bras 5 a pour effet de faire tourner la première poulie 8 qui va enrouler la courroie 10 sur la seconde poulie 9 et entrainera le relèvement des bras 5 à la verticale selon un ordre inverse du principe précédemment exposé d'enroulement et de déroulement de la courroie 10 autour de la seconde poulie 9.

Le siège 1 comporte un moyen de blocage en position 11 destiné à empêcher le rappel en position verticale de l'assise 4 et des bras 5. Ce moyen de blocage en position 11 comporte deux doigts 12 d'indexage situés sous l'assise 4 et destinés à s'engager dans des perçages 13 des bras 5 pour bloquer l'assise en position relativement aux bras 5. On note qu'en bloquant ainsi le basculement de l'assise 4 par rapport aux bras 5 le relèvement des bras est impossible du fait du blocage de la première poulie 8 qui en résulte et donc du blocage du moyen de transmission de mouvement 10. Le moyen de blocage 11 limite le mouvement d'abaissement des bras 5 et forme ainsi un moyen de limitation 20.

Des pans inclinés 14 permettent de rétracter progressivement les doigts d'indexage 12 afin que ces derniers s'insèrent aisément dans les perçages 13 lorsque l'on abaisse l'assise 4. Chaque doigt d'indexage 12 est poussé par un ressort de rappel non représenté.

Une manette 15 permet de désengager les doigts 12 des perçages 13 pour permettre le relèvement de l'assise 4.

Avantageusement l'Homme du Métier calibrera à la rupture en cisaillement les doigts d'indexage 12 de manière à ce qu'ils puissent rompre sous l'effet d'un choc de mine afin de libérer le pivotement des bras vers le bas pour ne pas transmettre le choc à l'occupant du siège 1.

Une alternative consistera à dimensionner les courroies 10 de chaque bras pour quelles rompent sous l'influence d'un choc de mine ce qui permettra également la libre rotation des bras 5 vers le bas.

On a décrit ici un moyen de transmission de mouvement dans lequel le lien 10 est constitué par une courroie crantée et les roues 8 et 9 sont constituées par des poulies crantées. Il serait bien entendu possible de mettre en oeuvre des poulies et courroies lisses mais les efforts de frottement devront être dosés afin que le pivotement de l'assise puisse être réalisé sans décalage angulaire. Il serait aussi possible d'utiliser comme roues des pignons dentés et de leur associer un lien constitué par une chaîne par exemple.

## Revendications

1. Siège escamotable (1) comportant au moins un bras (5) articulé comportant un premier axe (6) perpendiculaire au niveau de sa première extrémité et un second axe (7) parallèle au premier axe (6) au niveau de sa seconde extrémité, premier axe (6) destiné à permettre le basculement d'une assise (4) par rapport au bras (5) et second axe (7) destiné à permettre le pivotement du bras (5) articulé relativement à un bâti (2), siège escamotable (1) comportant au moins un moyen de transmission (10) de mouvement destiné à faire basculer l'assise (4) entre une position horizontale et une position verticale sous l'action du pivotement du bras (5), action de pivotement du bras (5) limitée en amplitude par un moyen de limitation (20, 11), siège escamotable (1) **caractérisé en ce que** le moyen de transmission (10) de mouvement comporte un lien (10) reliant d'une part une première roue (8) solidaire de l'assise (4) et centrée sur le premier axe (6) et d'autre part une seconde roue (9) solidaire du bâti (2) et centrée sur le second axe (7).

2. Siège escamotable (1) selon la revendication 1, **caractérisé en ce que** le diamètre (Ø2) de la seconde roue (9) est le double du diamètre (Ø1) de la première roue (8).

3. Siège escamotable (1) selon une des revendications 1 à 2, **caractérisé en ce que** les roues (8, 9) et le lien (10) sont contenus dans le bras articulé (5).

4. Siège escamotable (1) selon une des revendications 1 à 3, **caractérisé en ce qu'**il comporte au moins un ressort (16) exerçant un effort de rappel entre l'assise (4) et le bras (5) de manière à rapprocher du bras (5) une face inférieure (4b) de l'assise (4), entraînant ainsi le relèvement du bras articulé (5).

5. Siège escamotable (1) selon une des revendications 1 à 4, **caractérisé en ce que** l'assise (4) comporte un moyen de blocage (11) du basculement de l'assise (4) par rapport au bras (5) afin de bloquer le siège (1) dans une position fixe.

6. Siège escamotable selon la revendication 5, **caractérisé en ce que** le moyen de blocage (11) constitue le moyen de limitation (20).

7. Siège escamotable (1) selon la revendication 6, **caractérisé en ce que** le moyen de blocage (11) est dimensionné pour rompre sous l'effet d'un choc de mine afin de libérer le pivotement du bras (5) vers le bas.

8. Siège escamotable (1) selon une des revendications 1 à 5, **caractérisé en ce que** le lien (10) est dimensionné pour rompre sous l'effet d'un choc de mine afin de libérer le pivotement du bras (5) vers le bas.

9. Siège escamotable selon une des revendications 1 à 4, **caractérisé en ce que** le moyen de limitation (20) comporte une butée (20) située sur le bras (5), butée (20) interférant avec le bâti (2) afin de limiter le pivotement du bras (5) vers le bas.

10. Siège escamotable (1) selon la revendication 9, **caractérisé en ce que** la butée (20) est dimensionnée pour rompre sous l'effet d'un choc de mine afin de libérer le pivotement du bras (5) vers le bas.

## Patentansprüche

1. Ausfahrbarer Sitz (1), aufweisend mindestens einen Gelenkarm (5), aufweisend eine erste Achse (6), die senkrecht im Bereich seines ersten Endes ist, und eine zweite Achse (7), die parallel zur ersten Achse (6) im Bereich seines zweiten Endes ist, wobei die erste Achse (6) dazu bestimmt ist, das Kippen einer Sitzfläche (4) in Bezug zum Arm (5) zu erlauben, und die zweite Achse (7) dazu bestimmt ist, das Schwenken des Gelenkarms (5) relativ zu einem Gestell (2) zu erlauben, wobei der ausfahrbare Sitz (1) mindestens ein Bewegungsübertragungsmittel (10) aufweist, welches das Kippen der Sitzfläche (4) zwischen einer horizontalen Position und einer vertikalen Position unter der Wirkung des Schwenkens des Arms (5) erlaubt, wobei die Schwenkaktion des Arms (5) in der Amplitude von einem Begrenzungsmittel (20, 11) begrenzt wird, wobei der ausfahrbare Sitz (1) **dadurch gekennzeichnet ist, dass** das Bewegungsübertragungsmittel (10) eine Verbindung (10) aufweist, die zum einen ein erstes Rad (8), das mit der Sitzfläche (4) fest verbunden und auf der ersten Achse (6) zentriert ist, und zum anderen ein zweites Rad (9), das mit dem Gestell (2) fest verbunden und auf der zweiten Achse (7) zentriert ist, verbindet.

2. Ausfahrbarer Sitz (1) nach Anspruch 1, **dadurch gekennzeichnet, dass** der Durchmesser (Ø2) des zweiten Rades (9) das Doppelte des Durchmessers (Ø1) des ersten Rades (8) ist.

3. Ausfahrbarer Sitz (1) nach einem der Ansprüche 1 bis 2, **dadurch gekennzeichnet, dass** die Räder (8, 9) und die Verbindung (10) in dem Gelenkarm (5) enthalten sind.

4. Ausfahrbarer Sitz (1) nach einem der Ansprüche 1 bis 3, **dadurch gekennzeichnet, dass** er mindestens eine Feder (16) aufweist, die eine Rückholkraft zwischen der Sitzfläche (4) und dem Arm (5) derart ausübt, dass an den Arm (5) eine untere Seite (4b) der Sitzfläche (4) herangeführt wird, was das Anheben des Gelenkarms (5) bewirkt.

5. Ausfahrbarer Sitz (1) nach einem der Ansprüche 1 bis 4, **dadurch gekennzeichnet, dass** die Sitzfläche (4) ein Blockiermittel (11) des Kippens der Sitzfläche (4) in Bezug auf den Arm (5) aufweist, um den Sitz (1) in einer festen Position zu blockieren.

6. Ausfahrbarer Sitz nach Anspruch 5, **dadurch gekennzeichnet, dass** das Blockiermittel (11) das Begrenzungsmittel (20) darstellt.

7. Ausfahrbarer Sitz (1) nach Anspruch 6, **dadurch gekennzeichnet, dass** das Blockiermittel (11) bemessen ist, um unter der Wirkung eines Minenstoßes zu zerbrechen, um das Schwenken des Arms (5) nach unten freizugeben.

8. Ausfahrbarer Sitz (1) nach einem der Ansprüche 1 bis 5, **dadurch gekennzeichnet, dass** die Verbindung (10) bemessen ist, um unter der Wirkung eines Minenstoßes zu zerbrechen, um das Schwenken des Arms (5) nach unten freizugeben.

9. Ausfahrbarer Sitz nach einem der Ansprüche 1 bis 4, **dadurch gekennzeichnet, dass** das Begrenzungsmittel (20) einen Anschlag (20) aufweist, der sich auf dem Arm (5) befindet, wobei der Anschlag (20) mit dem Gestell (2) interferiert, um das Schwenken des Arms (5) nach unten zu begrenzen.

10. Ausfahrbarer Sitz (1) nach Anspruch 9, **dadurch gekennzeichnet, dass** der Anschlag (20) bemessen ist, um unter der Wirkung eines Minenstoßes zu zerbrechen, um das Schwenken des Arms (5) nach unten freizugeben.

## Claims

1. A retractable seat (1) comprising at least one hinged arm (5) having a first perpendicular axis (6) at its first end and a second axis (7) parallel to the first axis (6) at its second end, the first axis (6) being intended to allow a seating part (4) to be tilted with respect to the arm (5) and the second axis (7) being intended to allow the hinged arm (5) to pivot with respect to a frame (2), the retractable seat (1) comprising at least one movement transmission means (10) intended to tilt the seating part (4) between a horizontal position and a vertical position under the pivoting action of the arm (5), the pivoting action of the arm (5) being restrained in range by a restraining means (20, 11), the retractable seat (1) being **characterised in that** the movement transmission means (10) comprises a link (10) connecting, on one hand, a first wheel (8) secured to the seating part (4) and centered on the first axis (6) and, on the other hand, a second wheel (9) secured to the frame (2) and centered on the second axis (7).

2. The retractable seat (1) according to claim 1, **characterised in that** the diameter (Ø2) of the second wheel (9) is two times larger than the diameter (Ø1) of the first wheel (8).

3. The retractable seat (1) according to one of claims 1 and 2, **characterised in that** the wheels (8, 9) and the link (10) are enclosed in the hinged arm (5).

4. The retractable seat (1) according to one of claims 1-3, **characterised in that** it comprises at least one spring (16) applying a restoring force between the seating part (4) and the arm (5) so as to move a lower face (4b) of the seating part (4) closer to the arm (5), thereby raising the hinged arm (5).

5. The retractable seat (1) according to one of claims 1-4, **characterised in that** the seating part (4) comprises a means (11) for locking the tilting of the seating part (4) with respect to the arm (5) so as to lock the seat (1) in a fixed position.

6. The retractable seat (1) according to claim 5, **characterised in that** the locking means (11) constitutes the restraining means (20).

7. The retractable seat (1) according to claim 6, **characterised in that** the locking means (11) is sized to break under a mine impact so as to release the pivoting of the arm (5) downwards.

8. The retractable seat (1) according to one of claims 1-5, **characterised in that** the link (10) is sized to break under a mine impact so as to release the pivoting of the arm (5) downwards.

9. The retractable seat (1) according to one of claims 1-4, **characterised in that** the restraining means (20) comprises a stop (20) located on the arm (5), the stop (20) interfering with the frame (2) so as to restrain the pivoting of the arm (5) downwards.

10. The retractable seat (1) according to claim 9, **characterised in that** the stop (20) is sized to break under a mine impact so as to release the pivoting of the arm (5) downwards.
